# EUROPEAN PATENT APPLICATION

(11) **EP 3 279 116 A1**
(43) Date of publication of application: **07.02.2018**
(21) Application number: 16772696.7
(22) Date of filing: 28.03.2016
(51) Int. Cl.: B65G 17/08, B65G 17/38, B65G 17/40

(54) **CONVEYOR CHAIN**

(30) Priority: 03.04.2015 JP 2015077093
(71) Applicant: Tsubaki Yamakyu Chain Co., Ltd., Minato-ku Tokyo 108-0074 (JP)
(72) Inventor: SHIBAYAMA, Katsutoshi, Osaka-shi Osaka 530-0005 (JP); HOTCHI, Satoshi, Tokyo 108-0074 (JP); SUYAMA, Hirotaka, Tokyo 108-0074 (JP)
(74) Representative: Westphal, Mussgnug & Partner Patentanwälte mbB
(86) International application number: PCT/JP2016/059796
(87) International publication number: WO 2016/158815

(57) **Abstract**

A conveyor chain (11) includes a plurality of links (12), which is arranged in a series arrangement direction and made of a first plastic, and a plurality of pins (15). Each pin (15) sequentially couples a corresponding one of the links (12) to an adjacent one of the links (12) in a pivotal manner. Each link (12) has a mounting surface (14), on which an object (13) can be mounted. Each pin (15) has a core rod (30) made of a metal and a cover member (32) that covers the core rod (30) and is made of a second plastic.

## Description

### TECHNICAL FIELD

The present invention relates to a conveyor chain that conveys an object.

### BACKGROUND ART

Conventionally, a conveyor chain described in Patent Document 1, for example, is known as one such conveyor chain. The conveyor chain has links, which are arranged in series. Any adjacent two of the links are pivotally coupled to each other by means of a pin. Each link has a mounting surface, on which an object can be mounted. With an object mounted on the mounting surface, a drive sprocket is rotated to move the conveyor chain in the series arrangement direction. The object is thus conveyed in the movement direction of the conveyor chain.

### PRIOR ART DOCUMENT

### Patent Document

Patent Document 1: Japanese Laid-Open Patent Publication No. 5-229620

### SUMMARY OF THE INVENTION

### Problems that the Invention is to Solve

For the above-described conveyor chain, the materials for the links and the pins are selected from metals and plastics depending on the purposes of use. If the links are made of plastic and the pins are made of metal, a portion of each link that contacts the corresponding pin is prone to be worn. If the links and the pins are all made of plastic, sufficient strength cannot be ensured for the pins though wear of the links and the pins is restricted.

The present invention has been accomplished to solve the above-described problems of the conventional technique. Accordingly, it is an objective of the invention to provide a conveyor chain capable of ensuring sufficient strength for pins while restricting wear of links and the pins.

### Means for Solving the Problems

Means for achieving the above objective and advantages thereof will now be discussed.

To achieve the foregoing objective and in accordance with one aspect of the present invention, a conveyor chain that includes a plurality of links and a plurality of pins is provided. The links are arranged in a series arrangement direction. Each link is made of a first plastic and has a mounting surface, on which an object can be mounted. Each pin sequentially couples a corresponding one of the links to an adjacent one of the links in a pivotal manner. Each pin has a core rod made of a metal and a cover member that covers the core rod and is made of a second plastic.

With this configuration, each pin contacts the corresponding link at the plastic cover member, which is made of the same type of material as the link. This restrains wear of the links and the pins compared to a case in which at least the links or the pins are made of metal. Also, since each pin has the core rod made of metal inside the cover member, sufficient strength of the pin is ensured. As a result, sufficient strength of each pin is ensured, while restraining wear of the links and the pins.

In the above-described conveyor chain, each cover member preferably has an insertion portion, into which one of the core rods can be inserted, and each core rod is preferably inserted into one of the insertion portions.

With this configuration, each pin is easily assembled simply by inserting the core rod into the insertion portion of the cover member.

In the above-described conveyor chain, each cover member is preferably shaped like a tube and has a non-circular cross section.

With this configuration, the hole of each link, into which the pin is inserted, has a shape corresponding to the cover member. This restrains the pin from spinning in the hole.

In the above-described conveyor chain, the conveyor chain preferably moves along a rail, and each link preferably has a sliding surface that is slidable on the rail. Also, the metal for the core rods is preferably a magnetic metal.

With this configuration, the magnet is embedded in the rail. Thus, each link is allowed to slide along the rail while being attracted to the rail via the core rod by the magnetic force. This restrains the links from separating from the rail in a curved section of the rail.

In the above-described conveyor chain, a length of the core rod in an axial direction of each pin is preferably equal to a length of the cover member in the axial direction.

With this configuration, the core rod and the cover member are flush with each other at the opposite end faces of each pin. This facilitates positioning for assembling the core rod with the cover member.

In the above-described conveyor chain, a length of the core rod in an axial direction of each pin is preferably smaller than a length of the cover member in the axial direction.

With this configuration, the cover member covers the core rod such that the core rod does not project from the cover member in the axial direction of each pin. The cover member thus effectively protects the core rod from foreign matter such as water.

### EFFECTS OF THE INVENTION

The present invention ensures sufficient strength of the pins, while restraining wear of the links and the pins.

### BRIEF DESCRIPTION OF THE DRAWINGS

Fig. 1 is a perspective view showing part of a conveyor chain according to one embodiment.
Fig. 2 is an exploded perspective view showing a link.
Fig. 3A is a front view showing the link.
Fig. 3B is a rear view showing the link.
Fig. 3C is a plan view showing the link.
Fig. 3D is a bottom view showing the link.
Fig. 3E is a right side view showing the link.
Fig. 3F is a left side view showing the link.
Fig. 4 is an exploded perspective view showing a pin.
Fig. 5 is a cross-sectional view showing a state in which the conveyor chain is set on a rail.

### MODES FOR CARRYING OUT THE INVENTION

A conveyor chain according to one embodiment will now be described with reference to the drawings.

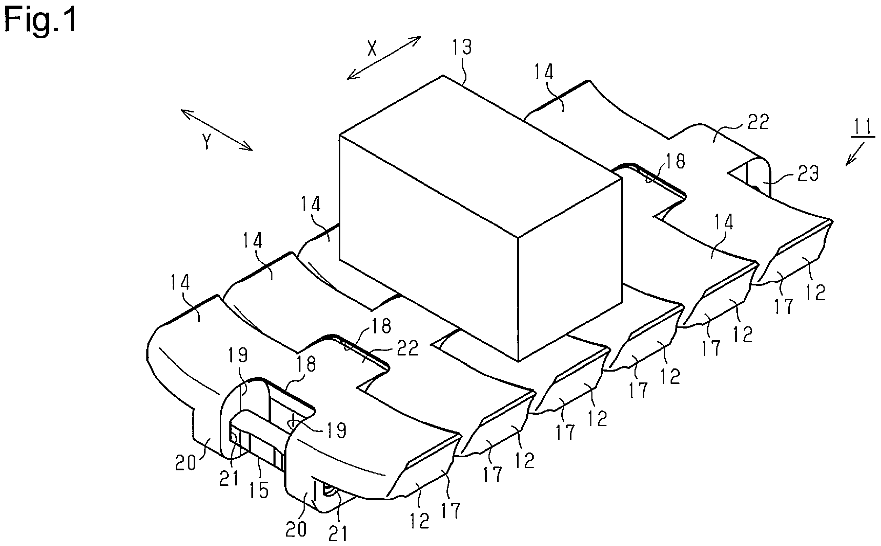

As shown in Fig. 1, a conveyor chain 11 includes plastic links 12, which are arranged in series. In Fig. 1, the upper surface of each link 12 configures a mounting surface 14, on which an object 13 can be mounted. The mounting surfaces 14 of the links are arranged continuously in the series arrangement direction X. In this state, any adjacent two of the links 12 in the series arrangement direction X are pivotally coupled to each other by a pin 15, which extends in the width direction Y. The width direction Y is perpendicular to the series arrangement direction X and corresponds to a direction extending along each mounting surface 14.

Although not illustrated, the conveyor chain 11 is configured to revolve and move as a drive sprocket (not shown) is rotated in a state in which the links 12, which are arranged in series, are endlessly coupled together.

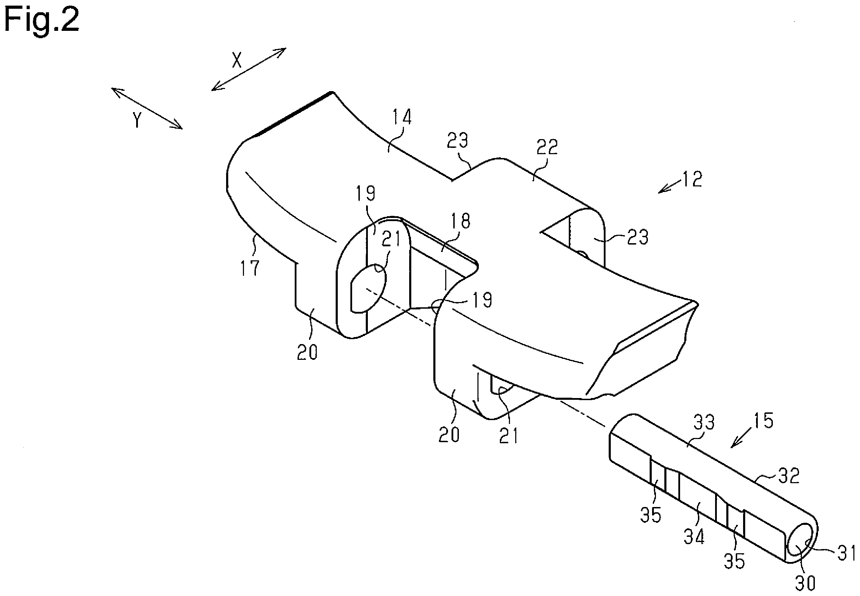

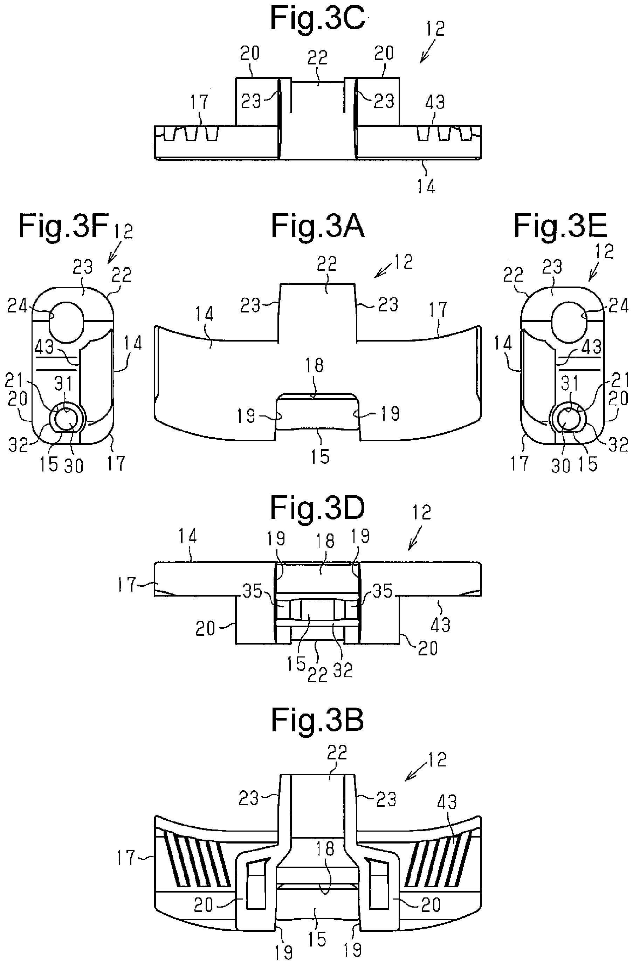

As shown in Figs. 2 and 3A to 3F, each link 12 includes a substantially rectangular plate portion 17, which is elongated in the width direction Y. A rectangular cutout portion 18 is formed in the plate portion 17 of each link 12. The cutout portion 18 extends from a middle section of the front surface of the plate portion 17 in the series arrangement direction X toward the rear surface of the plate portion 17 in the series arrangement direction X. Each cutout portion 18 has two inner side surfaces 19, which are opposed to each other in the width direction Y, and is formed such that the distance between the two inner side surfaces 19 is smaller than the length of each pin 15.

Two support portions 20, which are opposed to each other at the distance equal to the distance between the two inner side surfaces 19 of the cutout portion 18, are formed on the lower surface of the plate portion 17 of each link 12 opposite to the mounting surface 14. The two support portions 20 extend downward separately from the mounting surface 14 along the corresponding inner side surfaces 19 of the cutout portion 18. A support hole 21 is formed in each support portion 20 to extend through the support portion 20 in the width direction Y. Each pin 15 is held between the corresponding two of the support portions 20 in a state in which the opposite ends of the pin 15 are inserted in the support holes 21 of the support portions 20.

A coupling portion 22 shaped like a rectangular parallelepiped, which projects rearward from the rear surface of the plate portion 17 of each link 12 in the series arrangement direction X, is formed in the plate portion 17. The coupling portion 22 has two outer side surfaces 23, which are opposite to each other in the width direction Y, and is formed such that the distance between the two outer side surfaces 23 is slightly smaller than the distance between the two inner side surfaces 19 of each cutout portion 18. As shown in Figs. 3E and 3F, a coupling hole 24, which is larger than the support hole 21 formed in each support portion 20, is formed in the coupling portion 22 to extend through the coupling portion 22 in the width direction Y. The coupling hole 24 has an oblong circle-shape elongated in the series arrangement direction X.

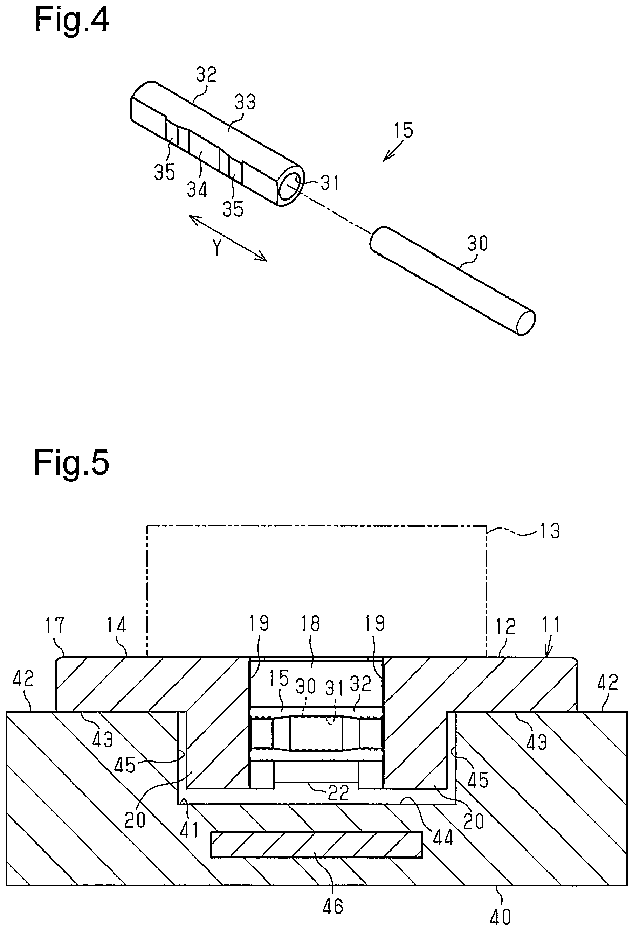

As shown in Figs. 2 and 4, each pin 15 includes a core rod 30 and a cover member 32. The core rod 30 is formed by a round rod made of magnetic metal (for example, steel). The cover member 32 has a circular insertion hole 31 serving as an insertion portion into which the core rod 30 can be inserted. The cover member 32 has a tubular shape and is made of plastic (for example, engineering plastic). The plastic for the cover members 32 of the present embodiment is a type different from the plastic for the links 12.

The length of the core rod 30 in the axial direction of each pin 15 (the width direction Y) is set equal to the length of the cover member 32 in the axial direction of the pin 15. As a result, in a state in which the core rod 30 is inserted in the insertion hole 31 of the cover member 32 to form each pin 15, the core rod 30 and the cover member 32 are flush with each other at the opposite end faces of the pin 15.

The cover member 32 is formed in a non-circular shape having a substantially D shape as viewed in a cross section along a plane perpendicular to the width direction Y. That is, the outer peripheral surface of the cover member 32 is configured by a cylindrical curved surface 33 and a flat surface 34. Two projections 35, each of which has a substantially rectangular plate-like shape, are formed in the flat surface 34 of the cover member 32. The projections 35 are employed to restrain separation of the pin 15 from the associated two support holes 21 when the opposite ends of the pin 15 are inserted in the support holes 21. The support holes 21 of each link 12, in which the pin 15 is inserted, each have a substantially D shape in correspondence with the outer peripheral surface of the cover member 32.

As shown in Fig. 1, to form the conveyor chain 11 with the links 12, the coupling portion 22 of the one of any adjacent two of the links 12 that is located on the front side in the series arrangement direction X (on the left side as viewed in Fig. 1) is inserted in the cutout portion 18 of the one of the two links 12 that is located on the rear side (on the right side as viewed in Fig. 1). In this state, the pin 15 is inserted from the support hole 21 of one of the support portions 20 of the rear link 12 into the support hole 21 of the other one of the support portions 20 of the rear link 12 through the coupling hole 24 of the coupling portion 22 of the front link 12.

As a result, the adjacent two of the links 12 in the series arrangement direction X are pivotally coupled to each other by means of the corresponding pin 15. By sequentially coupling each link 12 pivotally to another adjacent link 12 by means of the corresponding pin 15, the conveyor chain 11 is formed. At this stage, each pin 15 is loosely inserted in the coupling hole 24 of the corresponding front link 12 and is pivotal relative to the coupling hole 24. On the other hand, each pin 15 is non-pivotally inserted in the support holes 21 of the corresponding rear link 12.

The operation of the above-described conveyor chain 11 will now be described.

As shown in Fig. 5, the conveyor chain 11 is used in a state set on an elongated plastic rail 40, which is shaped substantially like a rectangular parallelepiped as viewed in a cross section. The rail 40 includes a groove 41, which extends throughout the rail 40 in the longitudinal direction, in a middle section in the transverse direction of an upper surface of the rail 40. The width of the groove 41 is set to such a size that the two support portions 20 of each link 12 can be inserted in the groove 41. The ranges of the upper surface of the rail 40 on the opposite sides of the groove 41 each configure a support surface 42, which supports the plate portion 17 of each link 12.

The surfaces of the plate portion 17 of each link 12 on which the two support portions 20 are arranged configure sliding surfaces 43, which are slidably supported by the corresponding support surfaces 42 of the rail 40. In a state in which each link 12 is supported by the support surfaces 42 of the rail 40 by means of the sliding surfaces 43, slight clearances exist between each of the two support portions 20 of the link 12 and an inner bottom surface 44 of the groove 41 of the rail 40 and between each support portion 20 and a corresponding inner side surface 45 of the groove 41. A permanent magnet 46 is embedded below the inner bottom surface 44 of the groove 41 of the rail 40 to extend throughout the rail 40 in the longitudinal direction.

To convey the object 13 using the conveyor chain 11, which is set on the rail 40, a drive sprocket (not shown) is driven with the object 13 mounted on any of the mounting surfaces 14. This moves the conveyor chain 11 along the rail 40. If the rail 40 is curved, the outer side surface of one of the two support portions 20 of each link 12 and the facing one of the inner side surfaces 45 of the groove 41 of the rail 40 are likely to slide on each other in the curved section of the rail 40. The conveyor chain 11 is thus likely to be separated from the rail 40.

However, in the conveyor chain 11 of the present embodiment, the core rod 30 of each pin 15 is made of magnetic metal. As a result, the conveyor chain 11 is attracted by the magnetic force of the permanent magnet 46, which is embedded in the rail 40. The conveyor chain 11 is thus maintained on the rail 40 by the magnetic force. This allows the conveyor chain 11 to move stably on the rail 40 without being separated from the rail 40 even in a curved section of the rail 40.

When the conveyor chain 11 moves on the rail 40, the sliding surfaces 43 of each link 12 slide on the corresponding support surfaces 42 of the rail 40. To lubricate the sliding surfaces 43 and the support surfaces 42, the conveyor chain 11 and the rail 40 may be wetted with water. Since the core rod 30 of each pin 15 of the conveyor chain 11 is made of metal in the present embodiment, the core rods 30 may become rusty if wetted with water. However, the plastic cover members 32 cover the core rods 30 and thus restrain wetting of the core rods 30 with water. This restrains rusting of the core rods 30.

When the conveyor chain 11 moves, the cover member 32 of each pin 15 and the inner peripheral wall of the coupling hole 24 of the corresponding link 12 slide on each other and thus become worn. However, in the conveyor chain 11 of the present embodiment, the cover member 32 of the pin 15 and the coupling hole 24 of the link 12 are made of different types of plastic and thus less likely to become worn than a case in which one of the cover member 32 and the coupling hole 24 is made of metal. This restrains elongation of the conveyor chain 11 due to wear of the cover members 32 of the pins 15 and the inner peripheral walls of the coupling holes 24 of the links 12 of the conveyor chain 11, or wear elongation of the conveyor chain 11. As a result, the conveyor chain 11 has a longer life.

The above-described embodiment achieves the following advantages.
(1) In the conveyor chain 11, each link 12 is made of a first plastic. Each pin 15 has the core rod 30 made of metal and the cover member 32, which covers the core rod 30 and is made of a second plastic. The pin 15 thus contacts the link 12, which is made of the first plastic, by means of the cover member 32, which is made of the second plastic. This restrains wear of the links 12 and the pins 15 compared to a case in which at least the links 12 or the pins 15 are made of metal. Also, since each pin 15 has the core rod 30, which is made of metal, inside the cover member 32, sufficient strength is ensured for the pins 15. As a result, sufficient strength is ensured for the pins 15 while wear of the links 12 and the pins 15 is restrained. The diameter of each pin 15 is thus decreased compared to a case in which the pins 15 are made exclusively of the second plastic while sufficient strength is ensured for the pins 15.
(2) In the conveyor chain 11, the cover member 32 of each pin 15 has the insertion hole 31, in which the core rod 30 can be inserted. The core rod 30 is inserted in the insertion hole 31. The pin 15 is thus easily assembled simply by inserting the core rod 30 into the insertion hole 31 of the cover member 32.
(3) In the conveyor chain 11, the cover member 32 of each pin 15 is formed like a tube and has a substantially D-shaped cross section. The support holes 21 of the link 12, in which the pin 15 is inserted, each have a substantially D shape in correspondence with the outer peripheral surface of the cover member 32. This restrains the pin 15 from spinning in the support holes 21.
(4) In the conveyor chain 11, each link 12 has the sliding surfaces 43, which are slidable along the rail 40. The core rod 30 of each pin 15 is made of a magnetic metal. Further, the permanent magnet 46 is embedded in the rail 40. As a result, the links 12 of the conveyor chain 11 are allowed to slide along the rail 40 while being attracted to the rail 40 by means of the core rods 30 using the magnetic force of the permanent magnet 46. This restrains separation of the links 12 from the rail 40 in a curved section of the rail 40.
(5) In the conveyor chain 11, the length of the core rod 30 in the axial direction of each pin 15 is set equal to the length of the cover member 32 in the axial direction of the pin 15. The core rod 30 and the cover member 32 are thus flush with each other at the opposite end faces of each pin 15. This facilitates positioning for assembling the core rod 30 with the cover member 32.

### Modifications

The above-described embodiment may be modified as follows.

In the axial direction of each pin 15, the length of the core rod 30 may be greater than the length of the cover member 32.

Each core rod 30 does not necessarily have to be made of a magnetic metal. That is, the core rod 30 may be made of a non-magnetic metal (such as copper or aluminum).

Each cover member 32 may be formed in a tubular shape that has a circular shape as viewed in a cross section.

Each cover member 32 may be formed in a tubular shape that has a polygonal shape or an elliptic shape as viewed in a cross section.

The insertion portion of each cover member 32 may be configured by a recess formed by closing one of the openings at the opposite ends of the insertion hole 31.

Each pin 15 may be configured by fully covering the core rod 30 with the cover member 32. In this case, the pin 15 is formed by insert molding in which the plastic cover member 32 is formed by using the metal core rod 30 as an insert, wrapping the core rod 30 with molten plastic, and solidifying the plastic.

The core rod 30 of each pin 15 and the insertion hole 31 of each cover member 32 may be formed to have mutually corresponding substantially D shapes.

The core rod 30 may be configured to have a length in the axial direction of each pin 15 smaller than that of the cover member 32. This allows each cover member 32 to cover the corresponding core rod 30 such that the core rod 30 does not project from the cover member 32 in the axial direction of the pin 15. The cover member 32 thus effectively protects the core rod 30 from foreign matter such as water. As a result, rusting of the core rods 30 is effectively restrained.

The second plastic for each cover member 32 may be the same as the first plastic for each link 12.

The permanent magnet 46 may be arranged only in a curved section of the rail 40.

The permanent magnet 46 may be changed to an electromagnet.

### DESCRIPTION OF THE REFERENCE NUMERALS

11...Conveyor Chain, 12...Link, 13...Object, 14...Mounting Surface, 15...Pin, 30...Core Rod, 31...Insertion Hole Serving as Insertion Portion, 32...Cover Member, 40...Rail, 43...Sliding Surface, X...Series Arrangement Direction

## Claims

1. A conveyor chain comprising:
a plurality of links, which is arranged in a series arrangement direction, wherein each link is made of a first plastic and has a mounting surface, on which an object can be mounted; and
a plurality of pins, wherein each pin sequentially couples a corresponding one of the links to an adjacent one of the links in a pivotal manner,
the conveyor chain being **characterized in that** each pin has a core rod made of a metal and a cover member that covers the core rod and is made of a second plastic.

2. The conveyor chain according to claim 1, **characterized in that**
each cover member has an insertion portion, into which one of the core rods can be inserted, and
each core rod is inserted into one of the insertion portions.

3. The conveyor chain according to claim 1 or 2, **characterized in that** each cover member is shaped like a tube and has a non-circular cross section.

4. The conveyor chain according to any one of claims 1 to 3, **characterized in that**
the conveyor chain moves along a rail,
each link has a sliding surface that is slidable on the rail, and
the metal for the core rods is a magnetic metal.

5. The conveyor chain according to any one of claims 1 to 4, **characterized in that** a length of the core rod in an axial direction of each pin is equal to a length of the cover member in the axial direction.

6. The conveyor chain according to any one of claims 1 to 4, **characterized in that** a length of the core rod in an axial direction of each pin is smaller than a length of the cover member in the axial direction.
